# FASCICULE DE BREVET EUROPEEN

(11) **EP 1 828 353 B1**
(45) Date de publication et mention de la délivrance du brevet: **11.01.2012**
(21) Numéro de dépôt: 05824636.4
(22) Date de dépôt: 29.11.2005
(51) Int. Cl.: C10G 69/02, C01B 3/38

(54) **ENCHAINEMENT DE PROCÉDÉS D'HYDROCONVERSION ET DE REFORMAGE À LA VAPEUR EN VUE D'OPTIMISER LA PRODUCTION D'HYDROGÈNE SUR DES CHAMPS DE PRODUCTION**
ABFOLGE VON HYDROKONVERSIONS- UND DAMPFREFORMIERUNGSPROZESSEN ZUR OPTIMIERUNG DER WASSERSTOFFPRODUKTION BEI PRODUKTIONSFELDERN
SEQUENCE OF HYDROCONVERSION AND VAPOUR REFORMING PROCESSES TO OPTIMIZE HYDROGEN PRODUCTION ON PRODUCTION FIELDS

(30) Priorité: 15.12.2004 FR 0413467
(43) Date de publication de la demande: 05.09.2007
(73) Titulaire: Institut Français du Pétrole, 92852 Rueil Malmaison Cedex (FR)
(72) Inventeur: PINAULT, Mathieu, F-69007 Lyon (FR); GAUTHIER, Thierry, F-69530 Brignais (FR); KRESSMANN, Stéphane, F-69360 Serezin du Rhône (FR); SELMEN, Arnault, F-69030 Jonage (FR)
(86) Numéro de dépôt international: PCT/FR2005/003008
(87) Numéro de publication internationale: WO 2006/064100

(56) Documents cités:
- EP-A- 0 103 948
- GB-A- 1 092 420
- US-A- 3 188 179
- US-A- 3 433 732
- US-A- 3 552 924
- US-A- 4 297 204
- US-A- 6 017 441
- CHRISTENSEN ET AL: "Adiabatic prereforming of hydrocarbons - an important step in syngas production", APPLIED CATALYSIS A: GENERAL, ELSEVIER SCIENCE, AMSTERDAM, NL LNKD- DOI:10.1016/0926-860X(95)00302-9, vol. 138, no. 2, 9 May 1996 (1996-05-09), pages 285-309, XP022250773, ISSN: 0926-860X

## Description

### Domaine de l'invention

L'invention concerne les domaines de la conversion et/ou du traitement des résidus issus de la distillation du pétrole, des charges liquides d'hydrocarbures issues de la liquéfaction du charbon et des pétroles bruts.

### Objet de l'invention

La présente invention concerne un enchaînement de deux procédés de traitement d'hydrocarbures :
- le premier (hydroconversion) comprenant au moins une enceinte réactionnelle et de préférence une succession d'enceintes réactionnelles, la ou les réactions se produisant à l'intérieur desdites enceintes et mettant en jeu au moins une phase solide, au moins une phase liquide et au moins une phase gazeuse,
- le deuxième (vaporéformage) comprenant au moins une enceinte réactionnelle et de préférence une succession d'enceintes réactionnelles, la ou les réactions se produisant à l'intérieur desdites enceintes permettent de fabriquer un réactif nécessaire aux réactions chimiques du premier.

### État de la technique

L'exploitation des pétroles dits « non-conventionnels » est en plein développement et continuera de croître dans les futures années. Ces produits nécessitent d'être traités sur le lieu de leur extraction. Ces lieux sont en général dans des zones éloignées de zones industrielles existantes, il est donc très recherché de proposer des enchaînements de procédés qui permettent de transformer ces matières sans apport externe de fluides induisant un coût de transport et la construction d'infrastructures. Pour valoriser ces ressources alternatives (sables bitumineux, bruts extra-lourds), c'est à dire soit produire des bruts dits synthétiques transportables par oléoducs, soit produire des produits finis, de fortes quantités d'hydrogène sont nécessaires. Cette production d'hydrogène nécessite non seulement des investissements en général coûteux, mais peut en plus consommer une partie de la charge exploitée, diminuant le rendement final du complexe.

Ainsi dans le brevet US 3972803, la partie la plus lourde produite après un procédé d'hydroconversion en lit bouillonnant (fond de la colonne sous vide) est envoyée à une unité de gaséification de résidu pour produire des hydrocarbures légers qui servent à alimenter les fours d'une unité de vaporéformage. Cette unité de vaporéformage est destinée à produire de l'hydrogène à partir des gaz de purge de l'unité d'hydroconversion. Bien que séduisant, cet enchaînement nécessite un investissement très lourd (gaséification) et consomme une partie des produits liquides de l'unité d'hydroconversion comme charge du gaséifieur.

Le brevet US 4526676 emploie comme charge de l'unité de gaséification une combinaison d'hydrocarbures légers sous forme gazeuse, ainsi que la partie la plus lourde produite par le procédé (fond de la colonne sous vide). Comme dans le brevet précédent, une gaséification est nécessaire. Pour alimenter cette unité, une unité dédiée de purification d'oxygène est nécessaire, ce qui rend plus complexe l'installation d'un tel complexe sur le site d'extraction des bruts qui, rappelons-le, sont en général dans des lieux difficiles d'accès, éloignés des centres industriels et des noeuds de communication.

Le brevet GB 1 092 420 décrit un procédé pour la conversion de distillat hydrocarboné en gaz valorisables. Le procédé combine au moins une étape d'hydrocraquage avec deux étapes de gazéification, ces deux étapes de gazéification étant des étapes de vapo-réformage productrice d'hydrogène. L'effluent sortant de la zone d'hydrocraquage est séparé en deux fractions : une première fraction plus légère passe dans une première zone de vapo reformage - pour donner un gaz riche en méthane et la deuxième fraction plus lourde passe dans une deuxième zone de vaporéformage pour donner un gaz riche en H2 dont une partie est recyclé dans la zone d'hydrocraquage.

Le brevet US 3 552 924 décrit un procédé de production d'hydrogène à partir d'un courant de raffinage en excès comportant des composés ayant un nombre d'atome de carbone supérieur à 6 jusqu'a des huiles lourdes. La charge est hydrocraquée par ajout d'hydrogène dans une zone d'hydrocraquage. L'effluent d'hydrocraquage est refroidi de manière à condenser les hydrocarbures ayant un nombre d'atomes de carbone supérieur à 6. La fraction vapeur résultante passe sur un catalyseur de vapo reformage à travers une zone de vapo reformage pour produire du monoxyde de carbone, du dioxyde de carbone et de l'hydrogène, cet effluent passe alors à travers une étape de conversion qui transforme le monoxyde de carbone en dioxyde de carbone et en hydrogène et l'effluent gazeux issu de la réaction de conversion est séparé en un courant hydrogène et en un courant de dioxyde de carbone, une partie du courant d'hydrogène étant recyclé dans l'étape d'hydrocraquage.

Dans le cas d'autres solutions existantes décrites dans la littérature (par exemple Biswas A K, Chem Eng World V10 N.4 98-100 APR 1975), l'hydrogène nécessaire au traitement des charges est fabriqué au niveau du vaporéformeur par un apport de gaz naturel généralement présent sur le site où les charges sont extraites. Ce gaz naturel peut être cher en raison du marché ou par le transport sur le site délocalisé de production d' huile lourde.

L'invention permet de remédier au moins partiellement à cet inconvénient en utilisant une partie ou la totalité des gaz légers produits pendant l'hydroconversion pour fabriquer l'hydrogène ou une partie de l'hydrogène nécessaire. Ces gaz sont produits dans les réacteurs et peuvent être extraits en aval des différentes capacités réactionnelles ou juste après chaque capacité réactionnelle.

De manière surprenante, les travaux de recherche de la demanderesse l'ont en effet conduite à trouver qu'un enchaînement de procédés de traitement d'hydrocarbures, c'est-à-dire un enchaînement hydroconversion/vaporéformage, dans lequel la ou les réactions se produisant à l'intérieur des enceintes du deuxième procédé permettent de fabriquer un réactif, l'hydrogène, nécessaire aux réactions chimiques du premier procédé, permettait de réduire les coûts de traitement des résidus issus de la distillation du pétrole, des charges liquides d'hydrocarbures issues de la liquéfaction du charbon, des pétroles bruts en traitant les hydrocarbures de manière autonome.

L'enchaînement de ces deux procédés permet en effet au complexe d'être auto-suffisant en hydrogène, avec un faible apport de gaz naturel, (autre que pour les brûleurs des fours).

### Description détaillée du procédé selon l'invention

L'invention décrit un enchaînement de procédés permettant de traiter des hydrocarbures tels que décrit au début du texte de manière complètement autonome. Cette invention se prête particulièrement bien aux gisements situés dans des zones géographiques difficilement accessibles.

La présente invention concerne un enchaînement de deux procédés de traitements d'hydrocarbures selon la revendication 1.

Le premier procédé (amont) de traitement d'hydroconversion d'hydrocarbures comprenant au moins une enceinte réactionnelle et de préférence une succession d'enceintes réactionnelles, la ou les réactions se produisant à l'intérieur desdites enceintes et mettant en jeu au moins une phase solide, au moins une phase liquide et au moins une phase gazeuse, ledit procédé amont étant mis en oeuvre selon un mode lit bouillonnant. Le deuxième procédé (aval) de vaporéformage, comprenant au moins une enceinte réactionnelle et de préférence une succession d'enceintes réactionnelles, la ou les réactions se produisant à l'intérieur desdites enceintes qui permettent de fabriquer un réactif, l'hydrogène, nécessaire aux réactions chimiques du premier. Le deuxième procédé aval comprend une première étape dite de pre-réformage qui permet de convertir au moins partiellement, et de préférence avec une conversion supérieure à 95 % poids, les hydrocarbures plus lourds que le méthane en méthane ce qui augmente l'efficacité de l'ensemble.

L'enchaînement de ces deux procédés permet au complexe d'être auto suffisant en hydrogène, avec un faible apport de gaz naturel (généralement inférieur à 3 % poids par rapport à la charge pour des conversions d'environ 60 % poids des composés 540°C+ et généralement inférieur à 1 % poids par rapport à la charge pour des conversions d'environ 90 % poids des composés 540°C+), (autre que pour les brûleurs des fours).

Selon l'invention, le procédé amont de conversion d'hydrocarbures comprend une zone de mise en contact d'une charge liquide, d'une charge gazeuse et de particules solides constituant la phase solide, lesdites particules présentant de préférence une activité catalytique.

Lesdites particules solides sont aussi être présentes au sein d'un lit bouillonnant. Le procédé en lit bouillonnant met en oeuvre un catalyseur supporté, contenant au moins un élément métallique :dont l'action catalytique s'effectue sous la forme de sulfure, dont la taille est telle que le catalyseur reste globalement dans le réacteur. La vitesse liquide dans le réacteur permet de fluidiser ce catalyseur mais ne permet pas d'entraîner celui ci à l'extérieur de la zone réactionnelle avec les effluents liquides. L'ajout et le soutirage de catalyseur en continu est possible et permet de compenser la désactivation du catalyseur.

De manière très préférée, le catalyseur contient du molybdène.

Des exemples de réacteurs fonctionnant selon les principes propres aux lits bouillonnants ainsi que leurs principales applications sont par exemple décrits dans « Chemical reactors, P. Trambouze, H. Van Landeghem et J.P. Wauquier, ed. Technip (1988) ».

Plus particulièrement mais non limitativement, la présente invention trouve par exemple son application dans la conversion d'une charge introduite dans ladite enceinte sous la forme liquide et contenant des hydrocarbures, ladite conversion s'effectuant par réaction avec une phase gazeuse, comprenant de l'hydrogène (hydroconversion) en présence d'une phase solide qui présente le plus souvent une activité catalytique.

Selon un mode de réalisation très préféré, l'enchaînement concerne un procédé d'hydroconversion, réalisé de préférence en lit bouillonnant, suivi d'un réformage à la vapeur des gaz de purge au niveau de la purification d'hydrogène incluse dans le procédé d'hydroconversion.

### Charges

Les charges que l'on traite dans le cadre de la présente invention sont choisies parmi :
- les résidus atmosphériques ;
- les résidus sous vide de distillation directe ; ;
- les pétroles bruts (notamment extra-lourds) ;

Selon la présente invention, les charges que l'on traite sont des résidus atmosphériques ou des résidus sous vide, ou des mélanges de ces résidus. Et des pétroles bruts (notamment pétroles extra-lourds) .

Ces charges sont caractérisées par le fait qu'elles contiennent une teneur non négligeable en métaux lourds tels que le nickel ou le vanadium, la teneur en métaux étant typiquement supérieure à 5 ppm et de manière préférée comprise entre 20 et 1000 ppm et de manière très préférée comprise entre 50 et 500 ppm. Une charge contenant une telle teneur en métaux lourds est caractéristique d'une charge constituée de résidus. Ainsi, compte tenu de leur propriété, ces charges sont appelées résidus.

Les résidus sont caractérisés par le fait qu'une fraction boue à une température supérieure à 565°C, ce qui peut être mis en évidence par distillation sous vide du résidu ou par les techniques modernes de distillation simulée par chromatographie. La fraction bouillant à des températures supérieures à 565°C est généralement supérieure à 10% poids de la fraction totale, préférentiellement supérieure à 50% poids.

Lors du processus d'hydroconversion, ces métaux se déposent sur les catalyseurs, s'accumulent sur ceux ci et le désactivent. Il faut donc régulièrement ajouter du catalyseur frais (sans métaux) pour maintenir une activité catalytique. Cet ajout de catalyseur s'effectue facilement si la réaction s'effectue en lit bouillonnant. En effet, le procédé en lit bouillonnant permet l'ajout de catalyseur frais ne contenant pas de métaux et le soutirage de catalyseur contenant des métaux en continu.

Ces charges sont également caractérisées par le fait qu'elles contiennent des quantités non négligeables d'asphaltène, c'est-à-dire une teneur en poids supérieure à 0.5 %, de manière préférée une teneur comprise entre 2 et 20% et de manière très préférée, comprise entre 3 et 15%.

Il est donc important de prendre des précautions pour limiter les phénomènes de cokage du catalyseur qui conduisent également à sa désactivation. A ces fins, il est avantageux de limiter au maximum l'acidité du support catalytique en mettant en oeuvre des support d'acidité faible ou modéré telle que la majorité des alumines.

### Conditions opératoires

### Première zone de traitement (amont)

Les conditions opératoires du procédé opéré dans la première zone de traitement d'hydrocarbures (amont) sont des conditions favorables à l'hydroconversion, c'est à dire à une pression totale pouvant aller de 80 à 500 bars, préférentiellement de 100 à 500 bars, et de manière très préférée, de 100 à 200 bars avec une pression partielle d'hydrogène variant de 10 à 500 bars, préférentiellement de 20 à 300 bars, avec une température de 300 à 600°C, et préférentiellement de 350 à 500°C, le contact s'effectuant pendant un certain temps nécessaire à la conversion du résidu, allant de 5 min à 20 h, et préférentiellement compris entre 1 et 10 h En fonction des applications, on pourra envisager de recycler avec la charge une partie des fractions lourdes des effluents ayant un point d'ébullition sensiblement égal ou supérieur à celui de la charge grâce à un fractionnement par distillation par exemple de l'effluent en aval de la zone réactionnelle ou du procédé (en aval de la dernière zone réactionnelle du premier procédé).

### Deuxième zone de traitement (aval)

Les conditions opératoires du procédé opéré dans la deuxième zone de traitement aval de vapo-réformage sont celles classiquement utilisées, c'est à dire généralement une pression de 10 à 50 bars absolus (de préférence 25 bars) et une température augmentant au fur et à mesure que l'on se rapproche du four de conversion, c'est à dire, dans le cas du vaporéformage, de 350 °C au niveau de l'hydrogénation des composés soufrés, à 550°C au niveau du pré-réformage et dé 850°C au niveau du four de réformage.

### Résumé de l'invention

- L'invention selon la revendication 1 concerne un procédé de traitement d'une charge d'hydrocarbures comprenant l'enchaînement d'un premier procédé amont d'hydroconversion, comprenant au moins une enceinte réactionnelle, la ou les réactions se produisant à l'intérieur desdites enceintes et mettant en jeu au moins une phase solide, au moins une phase liquide et au moins une phase gazeuse, et d'un deuxième procédé aval de vapo-réformage, comprenant au moins une enceinte réactionnelle. Le procédé amont est mis en oeuvre, selon un procédé en lit bouillonnant. Dans le procédé aval, la ou les réactions se produisant à l'intérieur desdites enceintes permettent de fabriquer un réactif nécessaire, l'hydrogène, aux réactions chimiques du premier, et ledit deuxième procédé aval comprend une première étape dite de pre-réformage qui permet de convertir au moins partiellement, et de préférence avec une conversion supérieure à 95 % poids, les hydrocarbures plus lourds que le méthane en méthane ce qui augmente l'efficacité de l'ensemble.

De préférence, le procédé amont comprend une zone de mise en contact d'une charge liquide, d'une charge gazeuse et de particules solides. Les particules solides sont présentes au sein d'un lit bouillonnant.

Dans ce cas, le procédé met en oeuvre un catalyseur supporté et contenant au moins un élément métallique.

De manière très préférée, les particules solides de catalyseur contiennent du molybdène.

Les conditions opératoires de la première zone de traitement d'hydrocarbures (amont) sont en général une pression totale de 80 à 500 bars, avec une pression partielle d'hydrogène variant de 10 à 500 bars, une température de 300 à 600°C, le contact s'effectuant pendant un temps allant de 5 min à 20h.

Les conditions opératoires de la deuxième zone de traitement d'hydrocarbures (aval) sont en général une pression de 10 à 50 bars absolus et une température augmentant au fur et à mesure que l'on se rapproche du four de conversion.

De manière avantageuse, on recycle avec la charge une partie des fractions résiduelles des effluents grâce à un fractionnement par distillation de l'effluent en aval de la dernière zone réactionnelle du procédé amont, le recyclage étant alors constitué d'une partie du liquide obtenu en fond de colonne.

### Présentation des figures

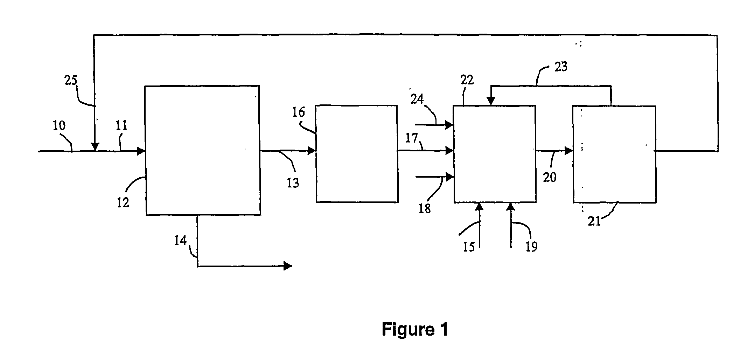

La Figure 1 illustre schématiquement un exemple de réalisation de l'invention comprenant l'enchaînement d'une unité d'hydroconversion en lit bouillonnant et un vaporéformage du gaz de purge issu de l'unité de purification d'hydrogène. Ce vapo-réformage des gaz de purge ainsi qu'un appoint de gaz naturel, permet d'être en autoconsommation d'hydrogène sur le complexe hydroconversion / vapo-réformage. En fonction du niveau de conversion, le complexe peut même être auto-suffisant en gaz naturel.

### Description détaillée de la Figure 1

La Figure 1 illustre le cas particulier mais non limitatif d'une unité d'hydroconversion 12 d'une charge lourde d'hydrocarbures 10 en présence d'hydrogène (H₂) et de particules catalytiques au sein de un ou plusieurs lits bouillonnants. L'effluent du dernier réacteur est séparé en une phase liquide et une phase vapeur dans un ballon séparateur. La phase liquide contenant les composés les plus lourds est ensuite détendue, refroidie et envoyée à un train de séparation non représenté sur la Figure 1 (flux 14). La phase vapeur est détendue, refroidie et séparée à plusieurs niveaux de pressions et de températures successifs. Les flux liquides récupérés au niveau de chaque séparation étant regroupés dans le flux 14 cité plus haut. Une partie de la phase vapeur est recyclée dans les réacteurs généralement après un traitement aux amines pour diminuer la teneur en H2S, tandis que la phase vapeur restant est détendue jusqu'à environ 30 bar absolus et purifiée pour enlever l'H2S présent (en général par un lavage aux amines). Puis, ce gaz est purifié pour obtenir un gaz d'une pureté d'hydrogène d'environ 99.5 % mol généralement par un procédé d'absorption-désorption. La partie non purifiée de ce gaz (flux 13) est envoyé vers un procédé de vapo-réformage (16, 22, 21). Ce flux comporte des hydrocarbures légers, de l'hydrogène mais aussi des composés soufrés. Le soufre de ces composés soufrés sont des poisons pour le catalyseur de vapo-réformage et sont transformés en H2S puis captés au niveau 16 . La quantité d'hydrogène contenue dans le flux 13 est généralement suffisante pour transformer ces composés soufrés mais un ajout est possible si nécessaire. Les composés typiques contenus dans ce flux 13 sont des hydrocarbures légers (C1 à C5, mais aussi des traces de composés soufrés par exemple des mercaptans de points d'ébullition voisins des composés hydrocarbonés majoritaires). Mais ce flux peut aussi n'être constitué que de composés C1 à C3 ou C1 à C2 voire même C1 seul.

Dans le cas décrit à la figure 1, les hydrocarbures légers débarrassés des composés soufrés (flux 17) sont envoyés au pré réformeur suivi du vapo-réformeur (inclus dans l'unité 22) ainsi que du gaz naturel (flux 18) et de la vapeur d'eau (flux 24). Les fours de l'unité 22 sont alimentés par du gaz naturel (flux 15) disponible sur le site ainsi que de l'air nécessaire à la combustion (flux 19). Le flux 20 sortant du vapo-réformage contient de l'hydrogène en grandes quantités, mais aussi du monoxyde de carbone, du dioxide de carbone et des hydrocarbures légers non transformés. Il est donc nécessaire de purifier ce flux 20 dans une unité de purification d'hydrogène (type absorption-désorption), unité 21. Le flux 25 sortant de l'unité 21 est constitué d'hydrogène avec une pureté d'environ 99.5 % mol qui est alors comprimé puis renvoyé à l'entrée de l'unité d'hydroconversion (flux 11, mélange charge-hydrogène). Au niveau de l'unité 21, le flux 23 résultant de la purification de l'hydrogène est renvoyé au niveau des fours de vapo-réformage dans l'unité 22.

Cet enchaînement d'unités permet de traiter les charges décrites par un procédé d'hydroconversion en étant auto suffisant en hydrogène ce qui est très avantageux pour des unités installées sur ou près des champs de production.

La comparaison entre les trois exemples qui suivent permet de montrer les avantages liés à la présente invention. L'Exemple illustre l'application de l'invention à une unité fonctionnant en hydroconversion à un niveau de conversion de 90 %.

Ces exemples sont issus d'expérimentations réalisées dans des unités pilotes fonctionnant en lit bouillonnant.

### Exemple 1 : Unité fonctionnant à 90 % de conversion des 540° C+

Le fuel gaz issu de l'unité d'hydroconversion représente, à ce niveau de conversion 9.5 % poids de la charge fraîche de l'unité d'hydroconversion. Ce fuel gaz contient de l'hydrogène qui est utilisé lors de la conversion des composés soufrés (et leur captation) en amont du pre-réformeur et du réformeur. Il est ajouté une très faible quantité de gaz naturel.

La composition du mélange de gaz envoyés au pré-réformeur (fuel gaz purifié + gaz naturel + vapeur d'eau) est la suivante (en % mol) :

| | |
|---|---|
| Méthane | 6.7 % |
| Ethane | 2.9 % |
| Propane | 2.6 % |
| Butane | 1.7 % |
| Vapeur d'eau | 77.9 % |
| Hydrogène | 8.2 % |
| TOTAL | 100. % |

La quantité de vapeur d'eau introduite avant le pré-réformeur est telle que le rapport molaire H2O/C avant le four de réformage soit au moins égal à 3.1. La pression de l'unité de vapo-réformage est de 30 bar absolus.

La composition du gaz en sortie de pre réformeur (les réactions ont lieu à 550°C) est (en % mol) :

| | |
|---|---|
| Méthane | 20.0 % |
| Ethane | Traces |
| Propane | Traces |
| Butane | Traces |
| Vapeur d'eau | 62.3 % |
| Hydrogène | 13.3 % |
| CO2 | 4.4 % |
| TOTAL | 100.0 % |

Le gaz est ensuite introduit au niveau du four de réformage à une température de 840°C, le gaz en sortie de four présente la composition suivante (% mol) :

| | |
|---|---|
| Méthane | 3.7 % |
| Ethane | Traces |
| Propane | Traces |
| Butane | Traces |
| Vapeur d'eau | 33.7 % |
| Hydrogène | 47.4 % |
| CO | 9.7 % |
| CO2 | 5.5 % |
| TOTAL | 100.0 % |

Après purification de l'effluent de sortie du four de réformage, l'hydrogène produit représente 2.7 % poids de la charge considérée assurant l'autoconsommation de l'hydroconversion en hydrogène.

A 90 % de conversion des composés 540°C +, une consommation de seulement 0.5 % poids (par rapport à la charge fraîche à l'entrée de l'hydroconversion) de gaz naturel permet d'être auto suffisant en hydrogène au niveau du complexe (soit environ 3 % poids du gaz nécessaire à la production d'hydrogène).

## Revendications

1. Procédé de traitement d'une charge d'hydrocarbures qui est un pétrole brut ou un résidu issu de la distillation du pétrole, comprenant l'enchaînement d'un premier procédé amont d'hydroconversion, comprenant au moins une enceinte réactionelle, la ou les réactions se produisant à l'intérieur desdits enceints et mettant en jeu au moins une phase solide, en moins une phase liquide et au moins une phase gazeuse, et d'un deuxième procédé aval de vapo-reformage comprenant au moins une enceinte réactionelle, ledit procédé aval comprenant une première étape de conversion au moins partielle des hydrocarbures plus lourds que le méthane en méthane dite étape de pré-reformage et la ou les réactions se produisent à l'intérieur desdits enceintes du procédé aval permettant de fabriquer un réactif, l'hydrogène, nécessaire aux réactions chimiques du premier, **caractérisé en ce que** ledit procédé amont est mis en oeuvre dans une unité d' hydroconversion (12) de la charge lourde d'hydrocarbone (10) en presence d'hydrogène et de particules catelytiques au sein de un ou plusieurs lits bouillonnants, l'effluent du dernier réacteur est séparé en une phase liquide et une phase vapeur dans un ballon séparateur, la phase liquide contenant les composés les plus lourds est ensuite détendue, refroidie et envoyée à un train de séparation, la phase vapeur est détendue, refroidie et séparée à plusieurs niveaux de pressions et de températures successifs, les flux liquides récupérés au niveau de chaque séparation étant regroupés dans le flux (14) issu du train de séparation, une partie de la phase vapeur est recyclée dans les réacteurs tandis que la phase vapeur restant est détendue jusqu'à environ 30 bar absolue et purifiée pour enlever l'H₂ S présent, puis ce gaz est purifié pour obtenir un gaz d'une pureté d'hydrogène de 99,5% mol, la partie (13) non purifiée de ce gaz comporté des hydrocarbures légères, C1 à C5 de l'hydrogène mais aussi des composés soufrés, les hydrocarbures légers débarrassés des composés soufrés (flux 17) sont envoyés au pré-reformer suivi du vapo-reformer (22) ainsi que du gaz naturel (18) et de la vapeur d'eau (24), le flux (20) sortant du vaporeformage contient de l'hydrogène en grandes quantités, mais aussi du monoxyde de carbone, du dioxide de carbone et des hydrocarbures légers non transformés, ce flux est purifié dans une unité de purification d'hydrogène (21) et le flux sortent (25) est constitué d'hydrogène avec une porté de 99,5% mol, qui est alors comprimé puis renvoyé à l'entrée de l'unité d'hydroconversion

2. Procédé selon la revendication 1 fonctionnant en lit bouillonnant qui met en oeuvre un catalyseur supporté et contenant au moins un élément métallique.

3. Procédé selon l'une des revendications précédentes dans lequel les particules solides de catalyseur contiennent du molybdène.

4. Procédé selon l'une des revendications précédentes dans lequel la charge d'hydrocarbure contient une teneur en métaux lourds supérieure à 5 ppm.

5. Procédé selon la revendication 4 dans lequel la charge d'hydrocarbure contient une teneur en métaux lourds comprise entre 20 et 1000 ppm.

6. Procédé selon les revendications 4 ou 5 dans lequel la charge d'hydrocarbure contient une teneur en métaux lourds comprise entre 50 et 500 ppm.

7. Procédé selon l'une des revendications précédentes dans lequel les conditions opératoires de la première zone de traitement d'hydrocarbures (amont) sont une pression totale de 80 à 500 bars, avec une pression partielle d'hydrogène variant de 10 à 500 bars, une température de 300 à 600°C, le contact s'effectuant pendant un temps allant de 5 min à 20 h.

8. Procédé selon l'une des revendications précédentes dans lequel les conditions opératoires de la deuxième zone de traitement d'hydrocarbures (aval) sont une pression de 10 à 50 bars absolus et une température augmentant au fur et à mesure que l'on se rapproche du four de conversion.

9. Procédé selon l'une des revendications précédentes dans lequel on recycle avec la charge une partie des fractions résiduelles des effluents grâce à un fractionnement par distillation de l'effluent en aval de la dernière zone réactionnelle du procédé amont, le recyclage étant alors constitué d'une partie du liquide obtenu en fond de colonne.

## Claims

1. A process for treating a hydrocarbon feed which is a crude oil or a residue issued from petroleum distillation comprising a series of a first upstream process for hydrocarbon hydroconversion comprising at least one reaction chamber, the reaction or reactions occurring inside said chambers and employing at least one solid phase, at least one liquid phase and at least one gas phase, and a second downstream steam reforming process comprising at least one reaction chamber, said process comprising a first step for at least partial conversion of hydrocarbons heavier that methane into methane, termed the pre-reforming step, and in that the reaction or reactions occurring inside said chambers of the downstream process enables the production of a reagent, namely hydrogen, which is necessary for the reactions in the first process, **characterized in that** said upstream process is carried out in a hydroconversion unit (12) of the heavy hydrocarbon feed (10) in presence of hydrogen and catalytic particles in one or more ebullated beds, the effluent from the last reactor is separated into a liquid phase and a vapour phase in a separator drum, the liquid phase containing the heaviest compounds is then depressurized, cooled and sent to a separation string, the vapour phase is depressurized, cooled and separated at several successive pressures and temperatures, the liquid streams recovered at each separation are collected, a portion of the vapour phase is recycled to the reactors, while the remaining vapour phase is depressurized to about 30 bars absolute and purified to remove the H2S present, then the gas is purified to obtain a gas with a hydrogen purity of about 99.5% mol, the non purified portion of said gas (stream 13) comprises light hydrocarbons C1-C5, hydrogen and also sulphur-containing compounds, light hydrocarbons free from sulphur compounds (stream 17) are sent to the pre-reforming followed by the steam reformer (22) with natural gas (18) and steam (stream 24), the stream 20 leaving the steam reformer contains hydrogen in large quantities, but also carbon monoxide, carbon dioxide and light untransformed hydrocarbons, said stream 20 is purified in a hydrogen purification unit (21) and the stream (25) is constituted by hydrogen with a purity of about 99.5% mol, which is then compressed and returned to the hydroconversion unit inlet.

2. A process according to claim 1, functioning in ebullated bed mode employing a supported catalyst containing at least one metallic element.

3. A process according to one of the preceding claims, in which the solid catalyst particles contain molybdenum.

4. A process according to one of the preceding claims, in which the hydrocarbon feed contains a heavy metals content of more than 5 ppm.

5. A process according to claim 4, in which the hydrocarbon feed contains a heavy metals content in the range 20 to 1000 ppm.

6. A process according to claim 4 or claim 5, in which the hydrocarbon feed contains a heavy metals content in the range 50 to 500 ppm.

7. A process according to one of the preceding claims, in which the operating conditions in the first hydrocarbon treatment zone (upstream) are a total pressure of 80 to 500 bars, with a partial pressure of hydrogen of 10 to 500 bars, and a temperature of 300°C to 600°C, contact being made for a period of 5 minutes to 20 hours.

8. A process according to one of the preceding claims, in which the operating conditions in the second hydrocarbon treatment zone (downstream) are a pressure of 10 to 50 bars absolute and a temperature which increases as the conversion furnace is approached.

9. A process according to one of the preceding claims, in which a portion of the residual fractions of the effluents is recycled with the feed by means of distillation fractionation of the effluent downstream of the last reaction zone of the upstream process, the recycle then being constituted by a portion of the liquid obtained from the column bottom.

## Patentansprüche

1. Verfahren zur Behandlung einer Kohlenwasserstoffcharge, die ein Rohöl oder ein Rückstand aus einer Erdöldestillation ist, umfassend die Verbindung eines ersten Verfahrens vorgelagert der Hydrokonversion, umfassend wenigstens eine Reaktionskammer, wobei die Reaktion(en) innerhalb dieser Reaktionskammer ablaufen und wobei wenigstens eine feste Phase, wenigstens eine flüssige Phase und wenigstens eine gasförmige Phase eingesetzt werden mit einem der Dampfreformierung nachgelagerten zweiten Verfahren, umfassend wenigstens eine Reaktionskammer, wobei dieses nachgelagerte Verfahren eine erste Stufe der mindestens partiellen Konversion von Kohlenwasserstoffen schwerer als Methan in Methan umfaßt, wobei die besagte Prä-Reformierungsstufe und die eine oder mehrere Reaktionen innerhalb der Reaktionskammer des nachgelagerten Verfahrens ablaufen, und es erlauben, ein Reaktionsmittel, den Wasserstoff, herzustellen, der für die chemischen Reaktionen des ersten Verfahrens benötigt wird,
**dadurch gekennzeichnet, daß** dieses vorgelagerte Verfahren in einer Hydrokonversionseinheit (12) der schweren Kohlenwasserstoffcharge (10) in Gegenwart von Wasserstoff (H₂) und katalytischen Partikeln innerhalb von einem oder mehreren Bewegtbetten angewandt wird, wobei der Abfluß des zweiten Reaktors in einem Ballonseparator in eine flüssige Phase und eine Dampfphase getrennt wird, wobei die die schwersten Verbindungen enthaltende flüssige Phase anschließend entspannt, gekühlt und
einem Trennungsgang unterworfen wird, wobei die Dampfphase bei aufeinanderfolgenden unterschiedlichen Druck- und Temperaturniveaus entspannt, gekühlt und separiert wird, die bei dem Niveau der jeweiligen Trennung wiedergewonnenen flüssigen Ströme werden in den aus dem Trennungsgang entstammenden Strom (14) zusammengeführt, ein Teil der Dampfphase wird in die Reaktoren zurückgeführt, wohingegen die restliche Dampfphase auf einen Absolutdruck von etwa 30 bar entspannt und gereinigt wird, um den vorhandenen H₂S herauszulösen, anschließend wird dieses Gas gereinigt, um ein Gas mit einer Wasserstoffreinheit von etwa 99,5 mol-% zu erhalten, wobei der nicht gereinigte Teil (13) des Gases die leichten Kohlenwasserstoffe C1 bis C5, Wasserstoff aber auch schwefelhaltige Verbindungen enthält, die von schwefelhaltigen Verbindungen gereinigten leichten Kohlenwasserstoffe (Strom 17) werden in den Prä-Reformator überführt, der dem Dampfreformator (22) folgt, ebenso wie das Erdgas (Strom 18) und der Wasserdampf (Strom 24), der aus der Dampfreformation entstammende Strom (20), enthaltend Wasserstoff in großen Mengen, aber auch Kohlenmonoxid und Kohlendioxid und nicht umgewandelte leichte Kohlenwasserstoffe wird in einer Wasserstoffreinigungseinheit (21) gereinigt und der von dort stammende Strom (25) bestehend aus bereits verdichtetem Wasserstoff mit einer Reinheit von etwa 99,5 mol-% wird anschließend in den Eingang der Hydrokonversionseinheit überführt.

2. Verfahren nach Anspruch 1, welches in einem wallenden Bett arbeitet und einen geträgerten Katalysator verwendet, der wenigstens ein metallisches Element aufweist.

3. Verfahren nach einem der vorhergehenden Ansprüche, bei dem die festen Partikel des Katalysators Molybdän enthalten.

4. Verfahren nach einem der vorhergehenden Ansprüche, bei dem die Kohlenwasserstoffcharge einen Gehalt an Schwermetallen größer 5 ppm aufweist.

5. Verfahren nach Anspruch 4, bei dem die Kohlenwasserstoffcharge einen Gehalt an Schwermetallen zwischen 20 ppm und 1000 ppm aufweist.

6. Verfahren nach Anspruch 4 oder 5, bei dem die Kohlenwasserstoffcharge einen Gehalt an Schwermetallen zwischen 50 ppm und 500 ppm aufweist.

7. Verfahren nach einem der vorhergehenden Ansprüche, bei dem die Betriebsbedingungen der ersten Behandlungszone der Kohlenwasserstoffe (vorgelagert) ein Gesamtdruck von 80 bis 500 bar bei einem Wasserstoffpartialdruck zwischen 10 und 50 bar, einer Temperatur zwischen 300 und 600°C sind und bei dem die Kontaktzeit zwischen 5 min und 20 h beträgt.

8. Verfahren nach einem der vorhergehenden Ansprüche, bei dem die Betriebsbedingungen der zweiten Behandlungszone der Kohlenwasserstoffe (nachgelagert) ein Absolutdruck von 10 bis 50 bar und eine nach und nach erhöhte Temperatur sind, während man sich dem Konversionsofen annähert.

9. Verfahren gemäß einem der vorherigen Ansprüche, bei dem man mit der Charge einen Teil der Residuenfraktionen der Abflüsse zurückführt, wobei dank einer Fraktionierung durch Destillation des Abflusses nachgeschaltet der letzten Reaktionszone des vorgeschalteten Verfahrens, die Rückfuhr ebenfalls aus einem Teil der Flüssigkeit besteht, die am Fuß der Kolonne erhalten wird.
